# EUROPEAN PATENT APPLICATION

(11) **EP 1 879 390 A2**
(43) Date of publication of application: **16.01.2008**
(21) Application number: 07111451.6
(22) Date of filing: 29.06.2007
(51) Int. Cl.: H04N 7/167

(54) **Combined video de-synchronization and compression method applicable to collusion-resilient fingerprint, and corresponding encoding device and encoded video stream**

(30) Priority: 30.06.2006 CN 200610094802
(71) Applicant: FRANCE TELECOM, 75015 Paris (FR)
(72) Inventor: Liu, Zhongxuan, Beijing 100080 (CN); Lian, Shiguo, Beijing 100080 (CN); Wang, Ronggang, Beijing 100080 (CN); Ren, Zhen, Beijing 100080 (CN)
(74) Representative: Bioret, Ludovic

(57) **Abstract**

In a combined video de-synchronization and compression method for processing a raw video stream comprising a first sequence of successive raw video frames in order to obtain a resulting processed video stream comprising a second sequence of coded frames, the successions of a first phase of selecting frames to be space and/or time-de-synchronized and allocating to each selected frame a category such as I-frame, P-frame, P-frame or F-frame (for "fractional") with reference to known motion compensated and transform hybrid coding standards such as MPEG-2 or the H-264 compression standard; and a second phase of a single one-stroke processing of said raw video stream consisting of processing successively the frames selected with a combined time de-synchronization and compression process using a common motion estimation processing step. The method is particularly suited to video fingerprinting by blind watermarking.

## Description

### CROSS-REFERENCE TO RELATED APPLICATION

None.

### FIELD OF THE DISCLOSURE

This invention relates to a computer implemented video signal processing method and device applicable to digital video streams. It is primarily applicable to so-called "Digital Right Management" (DRM) systems enabling to fingerprint and trace down video streams and copies thereof.

It is particularly applicable to embed an imperceptible mark of identification in form of a fingerprint into source videos, or distributed copies of videos (motion pictures, etc..) for dissuading users, such as cinemas, professional video editors, (involved in video editing such as in press, advertisement, art et al), or the like, from copying or redistributing the videos without authorisation. Whenever copies are used or distributed illegally, the embedded fingerprint can be used for invalidating this illegal activity by identifying the redistributors.

The process and device according of the invention is fully compliant to the motion compensated and transform hybrid coding standards such as MPEG-2 or the H-264 compression standard.

### BACKGROUND OF THE DISCLOSURE

Various algorithms for watermarking digital videos by fingerprinting have been proposed.

However, one of the most difficult weaknesses in video fingerprinting is the so-called "collusion attack", where several fingerprinted videos each having a different fingerprint are combined by colluders (e. g. by averaging, replacement attacks, etc..) to form a new copy with an attenuated or removed fingerprint by mutual compensation of the respective fingerprints of the combined videos.

A method to resist such collusion attack has been disclosed by Yinian Mao and Kivanc Mihcak in "Collusion-Resistant Intentional De-Synchronization for Digital Video Fingerprinting. (Proceedings of IEEE International Conference on Image Processing (ICIP), 2005)". This document proposes to slightly pseudo-randomly change (desynchronize) each user's copy of a video in such a way that these changes will not be noticeable for an individual copy, but will be significant enough to produce perceptual artefacts when multiple copies are combined.

While such known method provides efficient resilience to collusion attacks, it still shows several drawbacks.

First of all, this known method is designed for processing raw videos and is not compliant with compression standards. Compression is however necessary for video transportation purpose, and has therefore to be carried out as a separate additional step.

Moreover, the de-synchronization process proposed in this prior disclosure requires motion estimation processing, separately of the motion estimation used in known compression methods such as MPEG, etc...

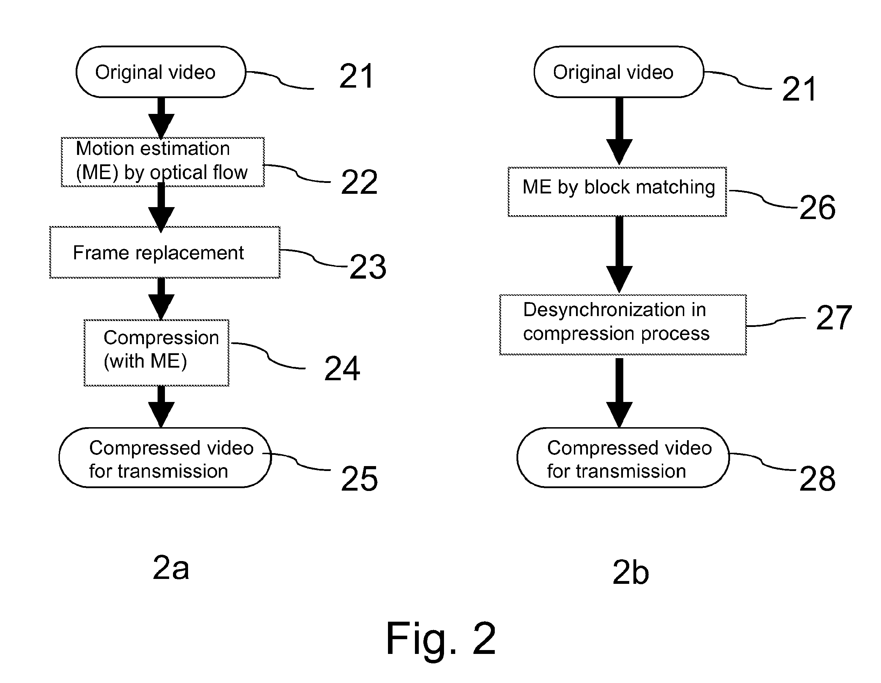

Consequently, as illustrated in Fig. 2a, the total video stream processing requires to carry out motion estimation processing twice in the video, which is complex and time consuming, namely:
- a first motion estimation step 22 by carried out on the original video 21, used to perform a frame replacement step 23 (replacing some original frames by de-synchronized frames) in the video stream; and,
- a second motion estimation necessary for the compression step 24 in order to obtain the compressed video 25 ready for transmission.

Moreover, the motion estimation step 22 proposed is of the optical flow type, which involves heavy computing.

In addition, the method disclosed does not use blind watermarking, and does not provide optimal security against brute-force attack as it is limited by only using time de-synchronization.

Finally, the fingerprint extraction from the fingerprinted videos according to the method disclosed in Mao et al. requests to resynchronize the copies or desynchronize the original media, which is time consuming and insecure.

### SUMMARY

According to the invention, the digital video frames are space and/or time desynchronized during the compression process. As a result, a same motion estimation step and process can be used for both the de-synchronization and the compression steps.

However, combining a pseudo-random de-synchronization of selected video frames together with the compression of the complete video stream raises several key issues in view to comply to specific requirements of the compression step according to existing coding standards, under constraint of reasonable processing time and cost.

To this aim, the combined video de-synchronization and compression method according to the invention for processing a raw video stream comprising a first sequence of successive raw video frames in order to obtain a resulting processed video stream comprising a second sequence of coded frames, is characterized in that it comprises three phases, namely:
- a first phase of pre-selection of coded frames to be comprised in the said second sequence of coded frames, said pre-selection consisting of allocating one of at least two categories of coded frames, to each said pre-selected coded frame,
   said first phase further including the step of identifying within said raw video stream
- a first set of raw frames, selected to undergo a first independent compression encoding process to form a first category of coded frames
   called I-frames; and,
- a second set of raw frames, selected to undergo a second compression encoding process function of at least one other frame of said second sequence, to form a second category of coded frames called P- and B-frames;
   said I-frames and said P- and B-frames being time-synchronised with corresponding raw frames of the said first sequence,
- a second phase of a single one-stroke processing of said raw video stream consisting of processing successively the frames selected in accordance to the said first phase of pre-selection by carrying out said first and second compression encoding processes respectively, so as to provide said coded frames,
   said second phase including a step of adding or substituting coded time-desynchronized frames of a third category, called F-frames, to the said second sequence of coded frames, said time-desynchronized frames being time-desynchronized with respect to raw frames of the first sequence, and being constituted of coded frames resulting from applying a third interpolation and compression encoding process to at least one other coded frame of said second set of frames,
said resulting processed video stream being formed of at least some of said coded frames.

It should be noted that, in said second phase, the invention allows to either add or substitute coded time-desynchronized frames within the said second sequence of coded frames. This means that a time-desynchronized coded F-frame may be either inserted in the sequence while maintaining neighboring coded frames, or may take the place of a potential coded frame which would have been processed from a given original raw frame in the succession of frames of the sequence, the corresponding potential coded frame replaced not being maintained nor even calculated.

The method provides consequently a wide range of processing scheme, i.e. a great potential diversity for the resulting processed video stream, and a corresponding robustness against attacks.

In a preferred embodiment of the invention, the combined method further comprises a third phase consisting of embedding a fingerprinting in said processed video stream. This illustrates that the method of the invention is particularly suited to watermarking, including blind watermarking, while offering increased robustness against to such attacks as inter and intra collusion, frame dropping, and trans-coding.

Another feature of the invention is that said compression encoding processes of said second phase are compliant to the motion compensated and transform hybrid coding standards such as MPEG-2 or the H-264 compression standard. More precisely, according to a preferred embodiment, and as already emphasized here-above, said encoding processes include a step of estimating motion vectors in the video frames, and the motion vectors estimated in at least some of said compression encoding processes are also used for the interpolation process of the time-desynchronized F-frames.

In other words, the method of the invention allows for a single one-stroke processing of said raw video stream, by processing successively the frames selected, which distinguishes the invention over the prior art where the video stream had to be processed twice for carrying out both the compression and the selective time de-synchronization respectively.

Moreover, the motion vectors of the motion estimation process of the invention are advantageously computed by block matching approach, which requests less computing than the optical flow process used in the prior art.

In the first phase of the method of the invention, by identifying and preselecting *ex ante* the coded frames of each of the I-, P-, B- and F-categories, and allocating a specific processing to the raw frames of the first original sequence used for obtaining said pre-identified coded frames, it becomes possible to carry out a combined de-synchronisation and compression process according to the invention.

Advantageously, in a preferred embodiment of the invention, the first phase of said combined video de-synchronization and compression method consists of following steps :
- computing a targeted image or skeleton (which we can also call a template) of said resulting processed video stream, said template comprising a sequence of instants of time corresponding to time synchronised and time-desynchronised coded frames of said second sequence of coded frames comprised in said resulting processed video stream,
- allocating a category among said four categories of I-frames, P-frames, B-frames and F-frames to each coded frames corresponding to each of said instant of times of said template sequence.

The identification and pre-selection *ex ante* of the category of each coded frame of the resulting stream, and hence the definition (or programming) of the pseudo-randomly distributed time-de-synchronizations in the resulting stream, are thus elegantly performed by merely defining the time sequence of the resulting stream before starting any compression and de-synchronization of the contents of the frames.

Advantageously, said sequence of instants of time is obtained through the following steps :
- generating a sequence of pseudo-random increasing numbers, said numbers representing the said instants of time;
- allocating said numbers to successive coded frames of the said second sequence of coded frames;
- determining a time de-synchronisation factor (k) for each said coded frames of the said second sequence, the said time de-synchronisation factor (k) being a function of said numbers,
   said de-synchronization factor (k) being used for the said allocating of a category among said three categories of I-frames, P- and B-frames and F-frames to each coded frames corresponding to each of said instant of times of said template sequence.

In a preferred embodiment, said sequence of pseudo-random increasing numbers satisfies at least one constraint belonging to the group of constraints comprising:
- a constraint that the length of said random sequence must be close to the length of the sequence of raw frames;
- a constraint that the time difference (in other words, the delay) between the instant of time of an original raw frames and of the instant of time of a corresponding coded frame is less than a threshold value according to a human perceptual quality requirement;
- a constraint that each number of said random sequence is rounded up or down so as to time-desynchronize a corresponding frame by a discrete predetermined value (such as 1/(2^{N}), N being an integer, within a predetermined time distance t between two neighbouring frames of said raw video stream
- a constraint that each number of said random sequence is rounded up or down by a step of 0,5t, t being a reference time distance between two neighbouring frames of said raw video stream.

Advantageously, in order to preserve the perception quality of the resulting processed video stream, said processed video stream shows exactly or substantially the same number of frames as the raw video stream and/or each or almost each raw frame is replaced by a corresponding coded frame.

In fact, the invention includes all following possibilities, namely :
- the processed stream shows exactly the same number of frames as the original video stream, by exact frame for frame substitution ;
- the processed streams shows a lower number of frames, by not retaining all said coded frames for forming said resulting processed video stream ;
- the processed streams shows a higher number of frames, by adding coded time-desynchronized frames to the said second sequence of coded frames.

However, in most cases, the man skilled in the art will chose parameters so that time de-synchronization will be implemented by inserting and losing frames with a total frames number remaining approximately the same.

According to an embodiment of the invention, the method includes a step of space de-synchronization of at least some of the said pre-selected coded frames, said space de-synchronization step being carried out between said first phase of selection and said second phase of a single one-stroke processing.

According to another feature of the invention, the time-desynchronized frames F-frames are encoded in using a 2-step process comprising the steps of:
- interpolating by computation by weighted averaging of the nearest motion compensated frames;
- calculating of a compression residue by motion compensation.

However, also advantageously, at least one of said F-frames is interpolated in using at least one of following methods :
- repetition of a former frame;
- repetition of a next frame.

The invention provides also for an encoding device carrying out some or all of the above feature of the method of the invention.

Advantageously, the encoding device of the invention comprises a first processing module carrying out the phase of selection, followed by a second processing module carrying out the phase of single one-stroke processing, said second module including :
- a first sub-module for identifying and separately processing the said I-frames in a I-frame processing unit;
- a second sub-module for processing the P-B- and F-frames, said second sub-module including a common motion vector estimation unit feeding a coding mode buffer, and connected to a residue computing unit through a F-frame identification and interpolation unit, said residue computing unit being also fed by the I-frame processing unit and providing feed back reference information to the said motion vector estimation unit through a reconstruction unit;
said second module being followed by a third module for fingerprint embedding and/or entropy encoding of the resulting video sequence.

The invention covers also a video stream encoded according to some or all of the above mentioned features of the combined video de-synchronization and compression method of the invention.

Other features and advantages of one or more embodiments of the invention shall appear more clearly from the following description, given by way of a simple, non-restrictive illustration, and from the appended drawings.

### BRIEF DESCRIPTION OF THE DRAWINGS

Figure 1 represents the main phases of the combined video de-synchronization and compression according to the invention, as applied to collusion resilient fingerprinting.
Figure 2 consists of Fig. 2a and Fig. 2b. Fig 2a has already been presented with reference to the prior art and illustrates the general principle of successive time de-synchronization followed by separate compression with each their own motion estimation step. Fib 2b, by contrast, shows the simplified streamlined combined video de-synchronization and compression method according to the invention.
Figure 3 is a flow chart of a preferred detailed embodiment of a fingerprint embedding process using the combined video de-synchronization and compression method according to the invention.
Figure 4 is a flow chart of a preferred detailed embodiment of a fingerprint extraction process out of a video stream processed according to combined video de-synchronization and compression method of the invention.
Figure 5 is an illustration of a preferred embodiment for the space de-synchronisation process likely to be used in the combined video de-synchronization and compression method of the invention.
Figure 6 is an illustration of a preferred embodiment for the time de-synchronisation process likely to be used in the combined video de-synchronization and compression method of the invention.
Figure 7 is a diagram illustrating an example of a step-by-step time de-synchronization process according to the invention applied to a sequence of 7 original frames of an original video stream.
Figure 8 shows an embodiment for a complete chain of devices carrying out the fingerprint embedding and extraction process according to the invention.

### DETAILED DESCRIPTION OF ILLUSTRATIVE EMBODIMENTS

Illustrative embodiments of the invention are presented in relation to the application of the invention to fingerprint embedding into an original digital video and fingerprint extraction out of the processed video stream.

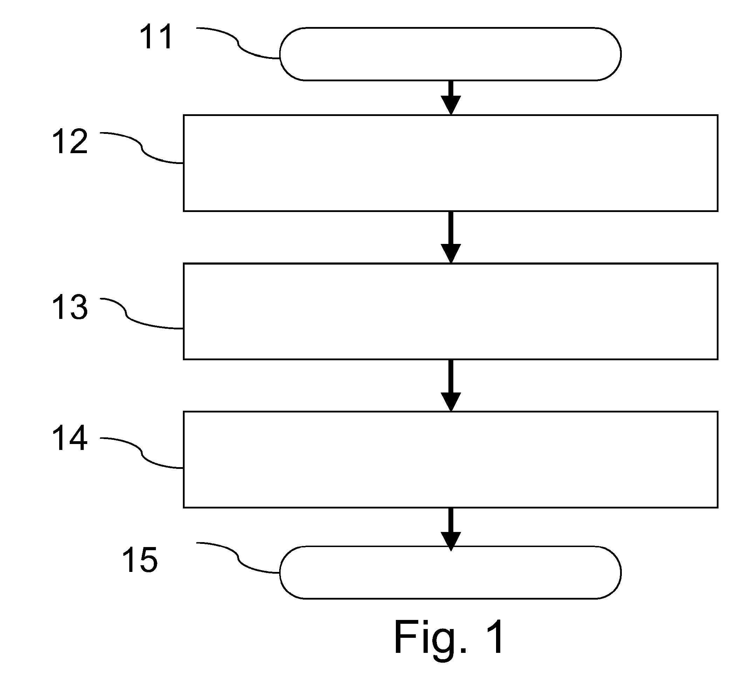

As illustrated in Fig. 1, a fingerprint embedding method according to the invention comprises three phases, through which a first original raw digital video stream 11 made of a sequence of successive raw video frames will be processed so as to end up as a resulting processed video stream 15 comprising a second sequence of coded frames, namely :
- a first phase 12 of pre-selection of coded frames which will be comprised in the said second sequence of coded frames, so as to compute a targeted image or skeleton (which we call also a template) of said resulting processed video stream 15;
- a second phase 13 of streamline "one-stroke" combined time de-synchronization and compression processing of the video stream;
- a third phase 14 of fingerprint embedding *stricto sensu* into said processed video stream.

Thus, unlike the known process of Fig 2a, and as shown in Fig. 2b, the method of the invention requests a single step 26 of motion estimation (preferentially by block matching) applied to an original video 21 (with or without space de-synchronization) before carrying out the combined time de-synchronization and compression processing 27 of the video stream to form the resulting compressed video 28.

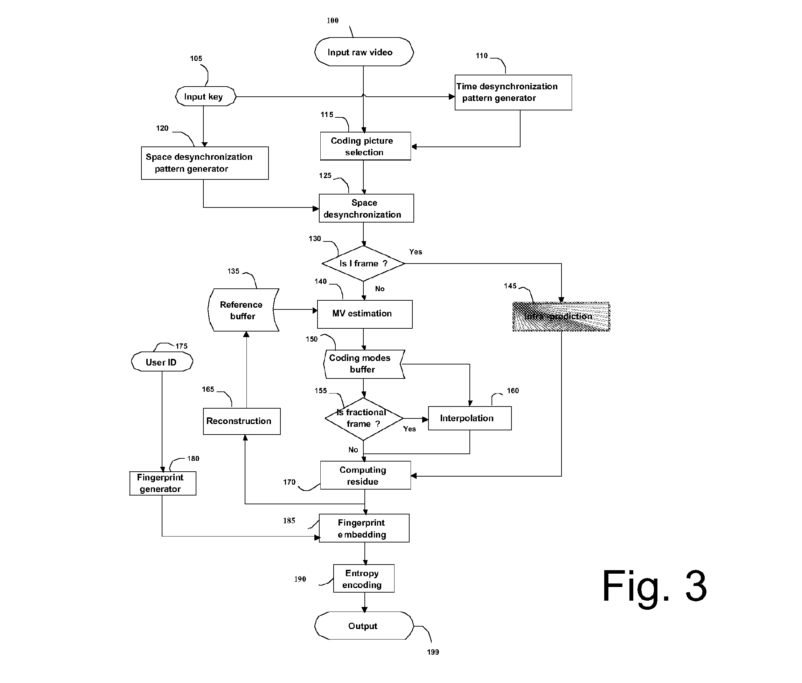

This is illustrated in more details in the flow chart of Figure 3. In Figure 3, the input raw video 100 is processed at step 115 in order to define the time sampling pattern of the resulting video.

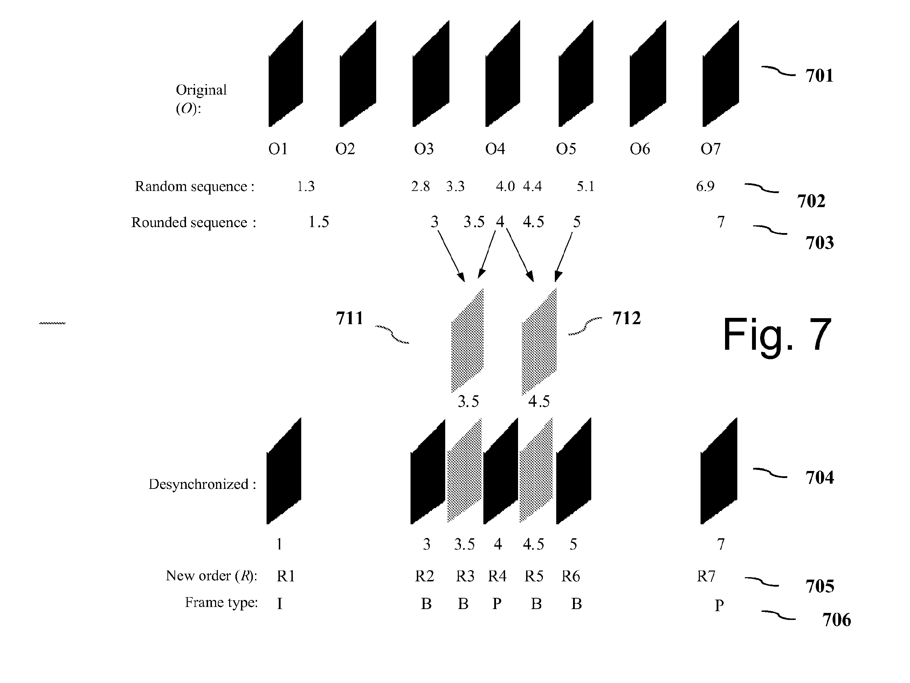

Step 115 sets up a template of the resulting video stream by selecting frames and allocating a category to each processed coded frame of the resulting video stream as will be further illustrated with reference to Figure 7.

At this stage, only original raw video frames which will be used in the combined time de-synchronization and compression process are kept (e.g. original frames "O" 1, 3, 4, 5, 7 with reference to Figure 7 as will be understood here under), while the other frames may be dropped (e.g. "O" 2 and 6 with reference to Figure 7)

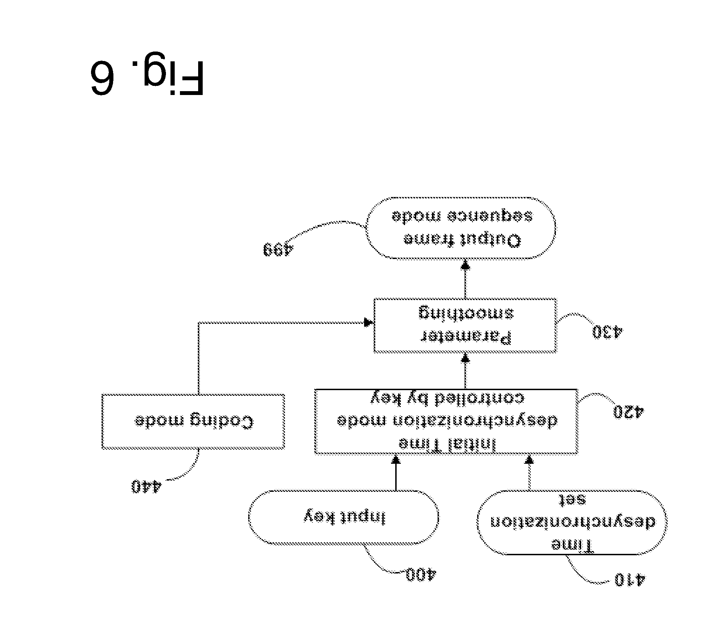

The time sampling pattern (i. e. the template) of the resulting video stream is determined by a time de-synchronization pattern generator 110 controlled by a key 105, as will be further explained with reference to Figure 6.

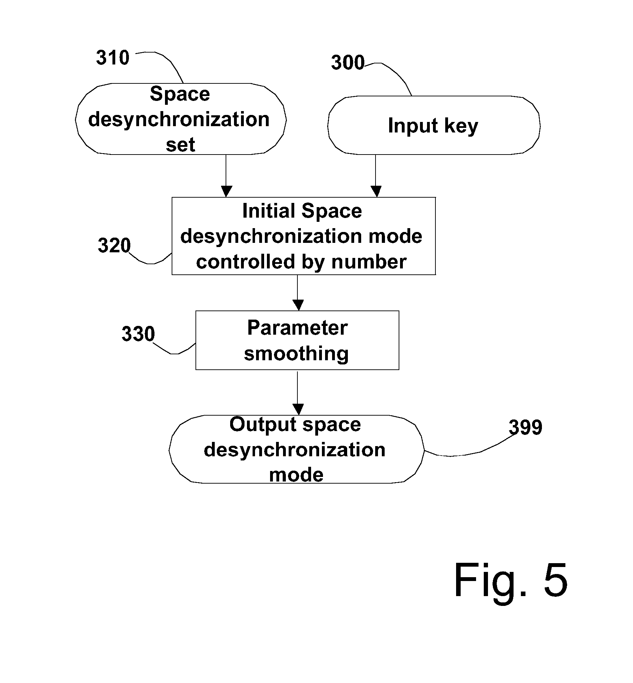

The selected frames are the space desynchronized following a pattern provided by space de-synchronization pattern generator (120) controlled by key (105), as will be further explained with reference to Figure 5.

From there on, the method enters the second phase of streamline "one-stroke" combined time de-synchronization and compression processing of the video stream, starting with step 130 distinguishing between original frames selected to be I-frames in the coded sequence from the other frames.

If the current frame is an I-frame (according the terminology used in motion compensated and transform hybrid coding standards such as MPEG-2 or the H-264 compression standard), it will undergo a specific compression encoding process at step 145, such as intra-prediction (for H.264, while MPEG 1/2 without this) and block transformed (170).

If the current frame detected at step 130 is a P or a B frame (according the same terminology used in motion compensated and transform hybrid coding standards such as MPEG-2 or the H-264 compression standard), motion vectors will be estimated at step 140 with the help of information of the reference frame provided by buffer 135.

Calculated motion vectors and encoding mode information are then input to coding mode buffer 150.

Step 155 distinguishes between frames selected to be time de-synchronized (Resulting frames "R" 3, 5 with reference to Fig. 7) from those frames which should not to be time de-synchronized (Resulting frames "R" 2, 4, 6, 7 with reference to Fig. 7).

Frames selected to be time-desynchronized, also called "fractional" frames, will be interpolated at step 160, and a prediction residue will be computed at step 170 according to known compression algorithms.

Non "fractional" frames will undergo a traditional encoding process with direct residue computing at step 170.

Motion vectors and residue are quantized as well as recycled for reconstruction at step 165 before feeding reference buffer 135 for further motion vector estimation.

Fingerprint embedding is performed at step 185, using information provided by fingerprint generator 180. It may be computed in using a user ID 175 obtained from a user database, in order to individualize the fingerprint

Blind watermarking is preferentially at fingerprint embedding step 185 (as well at the fingerprint extraction step).

The processed stream the preferentially undergoes entropy encoding 190, before transmission 199, storage (e.g. on discs) or any other suitable use.

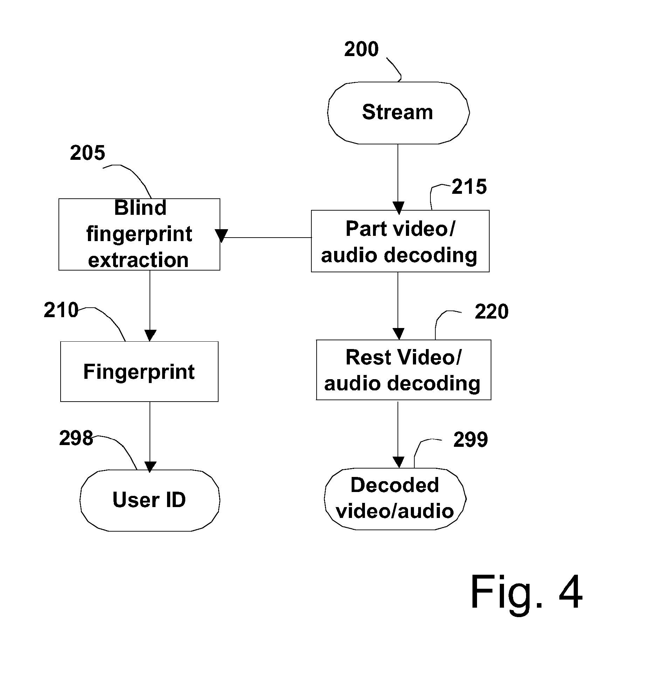

Figure 4 details the processing undergone by the coded stream 200 at the receiving or user's end. Received coded stream 200 undergoes first a partial video/audio decoding 215 to allow blind fingerprint extraction 205. The extracted fingerprint 210 is processed to recover user ID 298 and to carry out any requested proof checking.

In parallel, the coded stream undergoes a full video/audio decoding 220 to obtain the decoded video audio stream 299.

Figure 5 illustrates an embodiment suitable for carrying out a space de-synchronization of the original video stream, as already introduced in relation to Fig. 3.

Space de-synchronization is controlled by input key 300 (identical to input key 105 in Fig. 3). Input key 105, 300 may be a ransom or pseudo-random number, or a user ID, but is not limited to such embodiments.

For saving processing time and costs, it is possible to apply space de-synchronization to selected frames only. To this aim, space de-synchronization may be selectively triggered at step 320, under control of input key 300. In such case, input key 300 can be used either to selectively activate a predetermine de-synchronization mode, or to select between different possible space de-synchronization patterns, available from a space de-synchronization set unit 310 For example, available space de-synchronization may include rotation, scaling or translation, without being limited to such examples.

In a preferred embodiment, space de-synchronization is applied only to 1-frames, and referenced frames, the other frames not needing to be space-de-synchronized)

The space de-synchronization parameters may then undergo a smoothing process 330, before further use 399, i.e. control of space de-sync unit 125 (see Fig. 3).

Tests have shown that space de-synchronization substantially increases robustness of the fingerprinting method of the invention.

Figure 6 illustrates the time de-synchronization mode generation process already introduced in relation to Fig. 3.

Input key 400 is identical to input keys 105 and 300, and previous remarks apply also here and are not repeated.

As for the space de-synchronization mode, time de-synchronization is preferentially applied to selected frames only, so as to save processing time and costs. Input key 400 can be used at step 420 either to selectively activate a predetermined de-synchronization mode, or to select between different possible time de-synchronization patterns, available from a time de-synchronization set unit 410.

Possible time de-synchronization patterns may include, but are not limited to, shifting the time sampling point of a frame, as will be illustrated with reference to Figure 7.

The time de-synchronized parameters may then undergo smoothing process 430, before further use 499, i.e. control of frame selection unit 115 (see Fig. 3).

An illustrative example of a time de-synchronization process according to the invention is now described with reference to Figure 7.

As illustrated at the top of Fig. 7, an original raw video stream may be constituted for sake of simplification of a sequence 701 of seven successive frames referenced O1 to O7.

The resulting sequence after time de-sync process is constituted of a sequence 704 of seven resulting frames renumbered (705) R1 to R7, resulting sequence 704 having lost some frames and gained some other frames with respect to the original sequence 701.

In this case, the total number of frames of the original sequence and of the resulting sequence are the same, but it may not be systematically so, even though the parameters will generally be chosen so that both sequences will normally show approximately the same number of frames, in order to maintain a same average visual quality for both sequences.

For specific applications, the man skilled in the art may however willfully set up parameters to statistically decrease or even increase the number of frames in the resulting sequence.

According to the example in Fig. 7, a sequence 702 of (pseudo-) random numbers will be generated, namely following numbers {1.3, 2.8, 3.3, 4.0, 4.4, 5.1,6.9}.

The (pseudo-)random sequence is constituted of a sequence of non-decreasing number preferentially satisfying two conditions: firstly, the length of the random sequence should be near to the length of the original sequence; secondly, the time difference between the instants of time of the original frames and their corresponding resulting frames should not be larger than a predetermined threshold (according to predetermined perceptual quality requirements), for example, 1 second.

The next step 703 consists of rounding the sequence by rounding up or down each of the numbers of the sequence 702 to the nearest number by a step of 0,5, i.e. {1.5, 2.5, 3, 4, 4.5, 5, 7}.

If a rounded random number is an integer, the resulting frame is a mere replication of a corresponding original frame. Otherwise, the resulting frame will be interpolated.

As a consequence, two new potential "fractional" frames 711 and 712 are generated, and inserted in the sequence, while two other original frames 02 and O 6 are dropped, to form the template of the resulting sequence 704, 705 {R1, R2, R3, R4, R5, R6, R7}.

At this stage, a category I, P or B is allocated to each resulting frame, namely in the order of sequence 706 : {I, B, B, P, B, B, P}.

Turning now to the second phase of actual processing of the contents of the video stream, following steps will have to take place successively :
a) the first step is to form *R*₁ by space de-synchronization and intra-coding of O₁;
b) the second step is to form P-frame *R*₄. This is computed by firstly space desynchronizing *P*₄ and then compress the frame by motion compensation using frame *R*₁;
c) for the third step, a same process is also carried out to obtain B-frame *R₂* in using however both frames *R*₁ and *R*₄ for compensation;
d) for the fourth step, "fractional" F-frame (which is also a B-frame) *R*₃ is computed by means of a frame interpolating algorithm utilizing *R₂* and *R₄*. An example of a suitable algorithm is for example to be found in "Position Prediction Motion-Compensated Interpolation for Frame Rate Up-Conversion Using Temporal Modeling" by J.N. Zhang, L.F. Sun, S.Q. Yang, and Y.Z. Zhong, in ICIP 2005. Vol. 1: 53- 56. After that, *R*₃ is then encoded using compensation of *R*₁ and *R*₄. It can be noted that the space de-synchronization of *R*₃ depends on that of *R*₃ and *R*₄ ;
e) then similar steps are taken for the following P-frame *R*₇, B-frame *R*₆ and F-frame (which is also a B-frame) *R₅.*

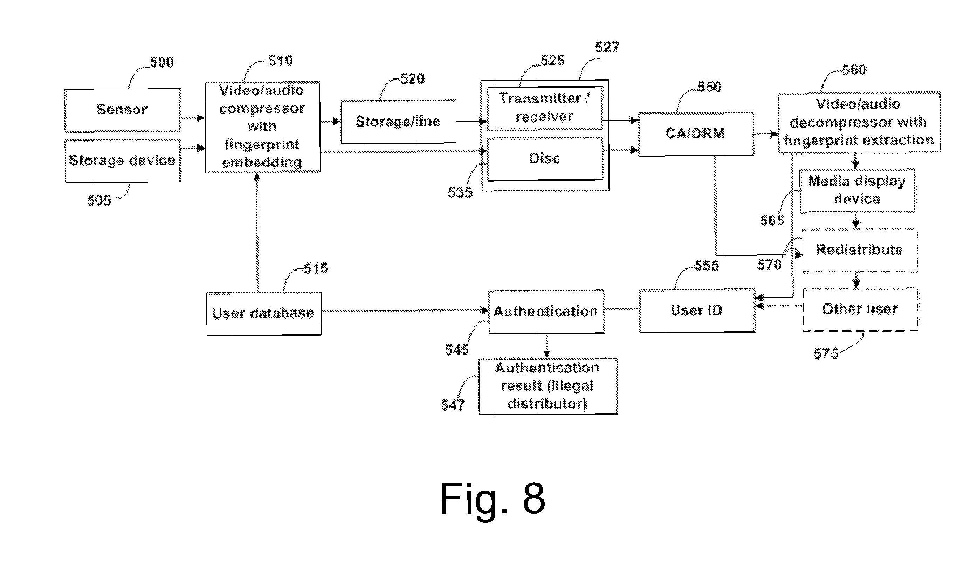

Figure 8 shows an embodiment for a complete chain of devices carrying out the fingerprint embedding and extraction process according to the invention. In the illustrative system of Fig. 8, the (video/audio) data is sourced from sensor 500 or storage device 505. The data is processed by a combined video de-sync and compressing unit 510 with fingerprint embedding carrying out the steps described in relation to Fig. 3. A user ID is sourced from a User database 515, for control of the fingerprint embedding and/or time and/or space de-sync steps.

The resulting compressed video and audio is transmitted by transmitter 525 (through storage devices or transmission lines 520) or engraved into discs 535.

At the receiving end, the video/audio stream is fed to a CA/DRM (Conditional Access / Digital Right Management) device 550 for user information invalidation. The invalidated stream is decompressed 560 with fingerprint extraction, and user ID 555 is extracted for invalidation. The decoded video/audio is available for display 565, redistribution 570 or other use 575.

If the video (as an original compressed video sourced from 550 or as a D/A transformed video by camera or others from 565) is redistributed (570), user ID 555 is used for invalidation. The invalidation process consists of comparing the extracted user ID 555 with corresponding information obtained from user database 515 for authentication 547.

## Claims

1. Combined video de-synchronization and compression method for processing a raw video stream comprising a first sequence of successive raw video frames in order to obtain a resulting processed video stream comprising a second sequence of coded frames, method **characterized in that** it comprises
- a first phase (12) of pre-selection of coded frames to be comprised in the said second sequence of coded frames, said pre-selection consisting of allocating one of at least two categories of coded frames, to each said pre-selected coded frame,
said first phase (12) further including the step of identifying within said raw video stream
- a first set of raw frames, selected to undergo a first independent compression encoding process to form a first category of coded frames called I-frames; and,
- a second set of raw frames, selected to undergo a second compression encoding process function of at least one other frame of said second sequence, to form a second category of coded frames called P- and B-frames;
said I-frames and said P- and B-frames being time-synchronized with corresponding raw frames of the said first sequence,
- a second phase (13) of a single one-stroke processing of said raw video stream consisting of processing successively the frames selected in accordance to the said first phase (12) of pre-selection by carrying out said first and second compression encoding processes respectively, so as to provide said coded frames,
said second phase (13) including a step of adding or substituting coded time-desynchronized frames of a third category, called F-frames, to the said second sequence of coded frames, said time-desynchronized frames being time desynchronized with respect to raw frames of the first sequence, and being constituted of coded frames resulting from applying a third interpolation and compression encoding process to at least one other coded frame of said second set of frames,
said resulting processed video stream being formed of at least some of said coded frames.

2. Combined video de-synchronization and compression method according to claim 1 **characterized in that** it further comprises a third phase of embedding a fingerprinting in said processed video stream.

3. Combined video de-synchronization and compression method according to any of claims 1 or 2, **characterized in that** said compression encoding processes are compliant to the motion compensated and transform hybrid coding standards such as MPEG-2 or the H-264 compression standard, said encoding processes including estimating motion vectors,
and **in that** motion vectors estimated in at least some of said compression encoding processes are used for the interpolation process of the time-desynchronized frames F-frames.

4. Combined video de-synchronization and compression method according to any of claims 1 to 3, **characterized in that** said first phase consists of :
- computing a template of said resulting processed video stream, said template comprising a sequence of instants of time corresponding to time synchronised and time-desynchronised coded frames of said second sequence of coded frames comprised in said resulting processed video stream,
- allocating a category among said three categories of I-frames, P- and B-frames and F-frames to each coded frames corresponding to each of said instant of times of said template sequence.

5. Combined video de-synchronization and compression method according to claim 4 **characterized in that** the said sequence of instants of time is obtained through the following steps :
- generating a sequence of pseudo-random increasing numbers, said numbers representing the said instants of time ;
- allocating said numbers to successive coded frames of the said second sequence of coded frames;
- determining a time de-synchronisation factor (k) for each said coded frames of the said second sequence, the said time de-synchronisation factor (k) being a function of said numbers,
said de-synchronisation factor (k) being used for the said allocating of a category among said three categories of I-frames, P- and B-frames and F-frames to each coded frames corresponding to each of said instant of times of said template sequence.

6. Combined video de-synchronization and compression method according to claim 5 **characterized in that** said sequence of pseudo-random increasing numbers satisfies at least one constraint belonging to the group of constraints comprising:
- a constraint that the length of said random sequence must be close to the length of the sequence of raw frames;
- a constraint that the time difference between the instant of time of an original raw frames and of the instant of time of a corresponding coded frame is less than a threshold value according to a human perceptual quality requirement;
- a constraint that each number of said random sequence is rounded so as to time-desynchronize a corresponding frame by a discrete predetermined value (such as 1/(2^{N}), N being an integer, within a time distance t between two neighbouring frames of said raw video stream;
- a constraint that each number of said random sequence is rounded by a step of 0,5t, t being a reference time distance between two neighbouring frames of said raw video stream.

7. Combined video de-synchronization and compression method according to any of the claims 1 to 6 **characterized in that** said processed video stream shows exactly or substantially the same number of frames as the raw video stream and/or **in that** each or almost each raw frame is replaced by a corresponding coded frame.

8. Combined video de-synchronization and compression method according to any of the claims 1 to 7, **characterized in that** it includes a step of space de-synchronization of at least some of the said pre-selected coded frames, said space de-synchronization step being carried out between said first phase of selection and said second phase of a single one-stroke processing.

9. Combined video de-synchronization and compression method according to any of the claims 1 to 8, **characterized in that** at least one of said F-frames is interpolated in using at least one of following methods :
a. repetition of a former frame;
b. repetition of a next frame.

10. Combined video de-synchronization and compression method according to any of the claims 1 to 8 **characterized in that** the time-desynchronized frames F-frames are encoded in using a 2-step process comprising the steps of:
a. interpolating by computation by weighted averaging of the nearest motion compensated frames;
b. calculating of a compression residue by motion compensation.

11. Combined video de-synchronization and compression method according to any of claims 10 **characterized in that** said motion compensated frames take into account motion vectors computed by block matching approach.

12. Encoding device carrying out the combined video de-synchronization and compression method according to any of claims 1 to 11.

13. Encoding device according to claim 12, **characterized in that** it comprises a first processing module carrying out the phase of selection, followed by a second processing module carrying out the phase of single one-stroke processing,
said second module including :
- a first sub-module for identifying and separately processing the said I-frames in a I-frame processing unit;
- a second sub-module for processing the P-B- and F-frames, said second sub-module including a common motion vector estimation unit feeding a coding mode buffer, and connected to a residue computing unit through a F-frame identification and interpolation unit, said residue computing unit being also fed by the I-frame processing unit and providing feed back reference information to the said motion vector estimation unit through a reconstruction unit;
said second module being followed by a third module for fingerprint embedding and/or entropy encoding of the resulting video sequence.

14. Video stream **characterized in that** it has been encoded according to the combined video de-synchronization and compression method according to any of claims 1 to 11.
